(19)

**Europäisches Patentamt**
**European Patent Office**
**Office européen des brevets**

(11)  **EP 4 495 490 A1**

(12)  **EUROPEAN PATENT APPLICATION**
published in accordance with Art. 153(4) EPC

(43) Date of publication:
**22.01.2025  Bulletin 2025/04**

(21) Application number: **22931746.6**

(22) Date of filing: **11.10.2022**

(51) International Patent Classification (IPC):
**F24F 1/0033** (2019.01)     **F24F 1/0022** (2019.01)
**F24F 13/24** (2006.01)

(52) Cooperative Patent Classification (CPC):
**Y02E 10/72**

(86) International application number:
**PCT/CN2022/124705**

(87) International publication number:
**WO 2023/173730 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **15.03.2022   CN 202210263892**

(71) Applicant: **Gree Electric Appliances, Inc. of
Zhuhai**
**Zhuhai, Guangdong 519070 (CN)**

(72) Inventors:
• **WANG, Qianqian**
  **Zhuhai, Guangdong 519070 (CN)**
• **XU, Fengsen**
  **Zhuhai, Guangdong 519070 (CN)**
• **XIA, Guanghui**
  **Zhuhai, Guangdong 519070 (CN)**
• **ZHONG, Dinghan**
  **Zhuhai, Guangdong 519070 (CN)**
• **WEI, Yanyan**
  **Zhuhai, Guangdong 519070 (CN)**

(74) Representative: **Zacco GmbH**
**Bayerstrasse 83**
**80335 München (DE)**

(54)  **AIR DUCT STRUCTURE AND AIR CONDITIONER HAVING SAME**

(57)     The present invention provides an air duct structure and an air conditioner with the air duct structure. The air duct structure includes a first air duct portion and a second air duct portion, the first air duct portion is provided with a first fan installation cavity, the second air duct portion is provided with a second fan installation cavity, a distance between a first plane where a central line of the first fan installation cavity is located and a second plane where a central line of the second fan installation cavity is located is H, and a value range of H is 630mm≥H≥570mm; The first air duct portion includes a first upper air duct section, a first transition section and a first lower air duct section, and the value range of the bending angle α between the first transition section and the first upper air duct section is 40degrees≥α≥ 25degrees. The air duct structure of the present invention solves the problem that the flow path resistance of the air duct structure is relatively high in some embodiments.

Fig. 1

EP 4 495 490 A1

## Description

## Cross-Reference to Related Application

The present invention claims priority to Chinese Patent Application No. 202210263892.9, filed to the China National Intellectual Property Administration on March 15, 2022 and entitled " Air duct structure and air conditioner having same ", the invention of which is hereby incorporated by reference in its entirety.

## Technical Field

The present invention belongs to a technical field of air conditioners, and specifically relates to an air duct structure and an air conditioner with the air duct structure.

## Background

Currently, in a design of a fan air channel of an air conditioner, an air outlet power source is generally a centrifugal fan, an axial flow fan, and a cross-flow fan.

For an air conditioner capable of implementing distributed air supply, a centrifugal fan is generally used as a power output, and more than two centrifugal fans are generally disposed in the air conditioner. In the design of the air duct, problems such as large bending and twisting of the flow channel, high resistance of the flow channel, the air flow impacting the wall surface of the flow channel, and poor sound quality of the noise tend to occur.

## Summary

The main purpose of the present invention is to provide an air duct structure and air conditioner with the air duct structure, so as to solve the problem of high flow resistance of the air duct structure in some embodiments.

To achieve the above purpose, according to one aspect of some embodiments of the present invention, an air duct structure is provided, including a first air duct portion and a second air duct portion, the first air duct portion is provided with a first air duct, the first air duct is provided with a first fan installation cavity for installing a first fan, the second air duct portion is provided with a second air duct, the second air duct is provided with a second fan installation cavity for installing a second fan, characterized in that: a first plane where a central line of the first fan installation cavity is located is disposed in parallel with a second plane where a central line of the second fan installation cavity is located, and a distance between the first plane and the second plane is H, wherein in a value range of H is 630mm≥H≥570mm; wherein the central line of the first fan installation cavity coincides with a rotation axis of an impeller part of the first fan, and the central line of the second fan installation cavity coincides with a rotation axis of an impeller part of the second fan; wherein the first air duct portion includes a first upper air duct section, a first transition section and a first lower air duct section which are sequentially connected, a bending angle between the first transition section and the first upper air duct section is α; or a bending angle between the first transition section and the first lower air duct section is α; or each of a bending angle between the first transition section and the first upper air duct section and a bending angle between the first transition section and the first lower air duct section is α; wherein a value range of α is 40degrees≥α≥25degrees.

In some embodiments, the second air duct portion includes a second upper air duct section, a second transition section, and a second lower air duct section which are sequentially connected, and a bending angle between the second transition section and the second upper air duct section is β; or a bending angle between the second transition section and the second lower air duct section is β, or each of a bending angle between the second transition section and the second upper air duct section and a bending angle between the second transition section and the second lower air duct section is β; wherein a value range of β is 16degrees≥β≥0degrees.

In some embodiments, the air duct structure has an air inlet, and at least a portion of the first upper air duct section is located at one side of the first lower air duct section along an air inlet direction of the air inlet.

In some embodiments, the air duct structure has an air inlet, and at least a portion of the second upper air duct section is located at one side of the second lower air duct section along an air inlet direction of an air inlet.

In some embodiments, the air duct structure has an air inlet, projections of at least a portion of the first air duct portion in a predetermined vertical plane and projections of at least a portion of the second air duct portion in the predetermined vertical plane are overlapped; and the predetermined vertical plane is perpendicular to an air inlet direction of the air inlet.

In some embodiments, the air duct structure has an air inlet, the first air duct portion has a tapered portion, and the tapered portion is connected with an end of the first lower air duct section away from the first transition section; the bottom of the second lower air duct section and the tapered portion are disposed in an air inlet direction of the air inlet and spliced together to form a lower air outflow transition portion, and a width C of an air flow circulation section of the lower air outflow transition portion in the air inlet direction of the air inlet has a value range of

$$0.9*(A+B) \geq C \geq 0.8*(A+B).$$

In some embodiments, a value range of a width A of an air flow circulation section of the second lower air duct section in a predetermined direction is 80mm to 120mm.

In some embodiments, a value range of the width B of an air flow circulation section of the first lower air duct section in a predetermined direction is 60mm to 90mm.

In some embodiments, in a same horizontal plane, a width A of an air flow circulation section of the second lower air duct section in a predetermined direction is greater than a width B of an air flow circulation section of the first lower air duct section in the predetermined direction; the air duct structure has an air inlet, and the predetermined direction is parallel to an air inlet direction of the air inlet.

In some embodiments, the second air duct portion is provided with a second lower air duct section, and a part of an air duct section of the first lower air duct section and a part of an air duct section of the second lower air duct section are separated by a partition plate body portion which is common by the first lower air duct section and the second lower air duct section; a length of the partition plate body portion in a vertical direction is $L_1$, wherein a value range of $L_1$ is 460mm≥$L_1$≥380mm.

In some embodiments, the partition plate body portion is provided with a connected opening for connecting the first air duct portion with the second air duct portion.

In some embodiments, a length of the connected opening in the vertical direction is $L_2$, and a value range of $L_2$ is 0.8*$L_1$≥$L_2$≥0.5*$L_1$.

In some embodiments, a stop plate is disposed in the connected opening, and the stop plate is spaced apart from a top end and a bottom end of the connected opening.

In some embodiments, a length of the stop plate in the vertical direction is p; wherein 120mm≥p≥100mm.

In some embodiments, a vertical distance between a bottom end of the stop plate and the bottom end of the connected opening is q; wherein 80mm≥q≥40mm.

In some embodiments, an air flow circulation section of the first lower air duct section located at the partition plate body portion is $S_1$, and an air flow circulation section of the second lower air duct section located at the partition plate body portion is $S_2$; where $S_1$:$S_2$=3:4.

In some embodiments, both the first fan installation cavity and the second fan installation cavity have air outlets, and a width of an air outlet of the first fan installation cavity is equal to a width of an air outlet of the second fan installation cavity; wherein a width direction of the air outlet of the first fan installation cavity and a width direction of the air outlet of the second fan installation cavity are a distribution direction of the first air duct portion and the second air duct portion.

In some embodiments, a value of H is 600mm.

In some embodiments, the first upper air duct section and the first lower air duct section are disposed along a horizontal direction; where α=30degrees.

In some embodiments, the second air duct portion includes a second upper air duct section, a second transition section, and a second lower air duct section which are sequentially connected, the second upper air duct section and the second lower air duct section are disposed along a horizontal direction, and a bending angle between the second transition section and the second upper air duct section is β;or a bending angle between the second transition section and the second lower air duct section is β, or each of a bending angle between the second transition section and the second upper air duct section and a bending angle between the second transition section and the second lower air duct section is β; wherein β=14degrees.

In some embodiments, at least a portion of the first air duct portion and at least a portion of the second air duct portion are overlapped with each other in a predetermined direction, and a width A of an air duct cavity of the second air duct portion in the predetermined direction is 100mm.

In some embodiments, at least a portion of the first air duct portion and at least a portion of the second air duct portion are overlapped with each other in a predetermined direction, and a width B of an air duct cavity of the first air duct portion in the predetermined direction is 74mm.

In some embodiments, at least a portion of the first air duct portion and at least a portion of the second air duct portion are overlapped with each other in a predetermined direction, and a width C of the overlapped portion of the first air duct portion and the second air duct portion is 175mm.

In some embodiments, a partition plate body portion is disposed at an overlapping portion of the first air duct portion and the second air duct portion, the partition plate body portion is common by the first air duct portion and the second air duct portion, wherein, a length of the partition plate body portion in a vertical direction is $L_1$, wherein $L_1$ is 440mm.

In some embodiments, a partition plate body portion is disposed at an overlapping portion of the first air duct portion and the second air duct portion, the partition plate body portion is common by the first air duct portion and the second air duct portion, wherein, a connected opening for connecting the first air duct portion with the second air duct portion is disposed on the partition plate body portion, and a length of the connected opening in a vertical direction is $L_2$, wherein $L_2$ is =330 mm.

According to another aspect of the present invention, an air conditioner is provided, including a housing and an air duct structure disposed in the housing, wherein, the air duct structure is the air duct structure described above.

By applying the technical solution of the present invention, the air duct structure of the present invention including a first air duct portion and a second air duct portion, the first air duct portion is provided with a first air duct, the first air duct is provided with a first fan installation cavity for installing a first fan, the second air duct portion is provided with a second air duct, the second air duct is provided with a second fan installation cavity for installing a second fan, wherein a first plane where a central line of the first fan installation cavity is located is disposed in parallel with a second plane where a central line of the second fan installation cavity is located, and a distance between the first plane and the second plane is H, wherein a value range of H is 630mm≥H≥570mm; wherein the central line of the first fan installation cavity coincides with a rotation axis of an impeller part of the first fan, and the central line of the second fan installation cavity coincides with a rotation axis of an impeller part of the second fan; wherein the first air duct portion includes a first upper air duct section, a first transition section and a first lower air duct section which are sequentially connected, a bending angle between the first transition section and the first upper air duct section is $\alpha$; or a bending angle between the first transition section and the first lower air duct section is $\alpha$; or each of a bending angle between the first transition section and the first upper air duct section and a bending angle between the first transition section and the first lower air duct section is $\alpha$; wherein a value range of $\alpha$ is 40degrees≥$\alpha$≥25degrees, and if an angle of the bending angle $\alpha$ is too large in the air conditioner, a structure of the first air duct portion 10 in a width direction of the first air duct portion 10 is not compact enough, a flow resistance is increased, and an air outflow volume is reduced; if the angle of the bending angle a is too small, a length of a direct current section of an air duct will be short in the case that a height of the main body of the air conditioner indoor unit is not changed, which is adverse to a circulation of air and a disposition of two parallel air ducts. Therefore, in the present invention, by designing the value range of a bending angle $\alpha$ and designing a value range of the distance H between two fan installation cavities, a layout of fan air duct is ensured to be compact, a flow resistance of the first air duct 100 is reduced, and the air outflow volume is improved.

## Brief Description of the Drawings

The accompanying drawings, which form a part of the present invention, are used for providing a further understanding of the present invention. The schematic embodiments and illustrations of the present invention are used for explaining the present invention, and do not form improper limits to the present invention. In the drawings:

Fig. 1 illustrates an internal structural schematic diagram of some embodiments of an air conditioner according to the present invention when a first air duct and a second air duct are not connected;

Fig. 2 illustrates a structural schematic structural diagram of some embodiments of an air duct structure according to the present invention; when a first air duct and a second air duct are not connected;

Fig. 3 illustrates a schematic diagram of the cross-section of the E-E based on the air duct structure in Fig. 2;

Fig. 4 illustrates a schematic diagram illustrating an internal structure of an air conditioner according to some embodiments of the present invention, in which a first air duct is communicated with a second air duct;

Fig. 5 illustrates a structural schematic diagram of a first embodiment of an air duct structure according to the present invention when the first air duct is connected with the second air duct;

Fig. 6 illustrates a structural schematic diagram of a second embodiment of an air duct structure according to the present invention when the first air duct is connected with the second air duct;

Fig. 7 illustrates a simulation comparison diagram of speeds before and after a first air duct and a second air duct are connected according to a first embodiment of an air duct structure of the present invention;

Fig. 8 illustrates a simulation comparison diagram of the air channel pressure before and after a first air duct and a second air duct are connected according to a first embodiment of an air duct structure of the present invention; and

Fig. 9 illustrates a simulation comparison diagram of the air channel pressure before and after a first air duct and a second air duct are connected according to a second embodiment of an air duct structure of the present invention.

## Illustration of Reference Numerals in the Drawings:

10, first air duct portion; 100, first air duct; 110. first fan; 101, first fan installation cavity; 11, first upper air duct section;12, first transition section; 13, first lower air duct section; 130, first outlet; 20, second air duct portion; 200, second air duct; 14, tapered portion; 140, lower air outflow transition portion; 210, second fan; 201, second fan installation cavity; 21, second upper air duct section; 22, second transition section;23, second lower air duct section; 230, second outlet; 30, partition plate body portion; 300, connected opening; 301, stop plate; 40, air inlet.

## Detailed Description of the Embodiments

It is important to note that the embodiments of the present invention and the characteristics in the embodiments can be combined under the condition of no conflicts. The present invention will be described below with reference to the drawings and embodiments in detail.

Since a cabinet air conditioner is subject to shape restrictions, most of the flow ducts thereof are designed to use flow ducts discharging air in parallel, and the fans are distributed vertically, because the lengths of the air outflow ducts are different and the air outflow areas are different, the flow velocities of the air outflow ducts are different, thus, different pressure differences are generated on the two sides of the flow duct wall shared by the flow ducts, and the air flow is not stable, this will cause the walls to vibrate, causing an aerodynamic noise abnormal sound like a 'drum sound'.

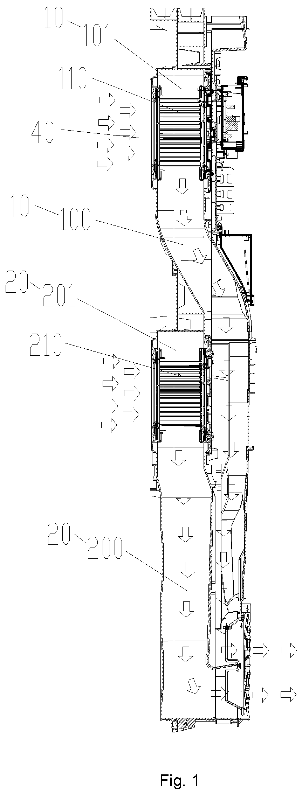

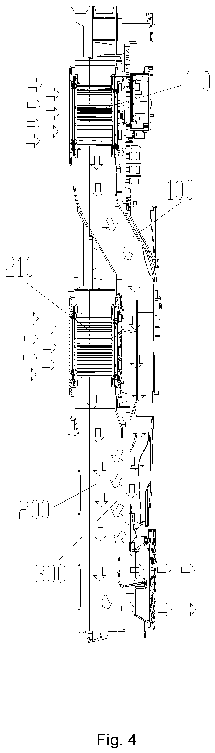

Please refer to Figs. 1 to 6, the present invention provides an air duct structure, which including a first air duct portion 10 and a second air duct portion 20, the first air duct portion 10 is provided with a first air duct 100, the first air duct 100 is provided with a first fan installation cavity 101 for installing a first fan 110, the second air duct portion 20 is provided with a second air duct 200, the second air duct 200 is provided with a second fan installation cavity 201 for installing a second fan 210, characterized in that: a first plane where a central line of the first fan installation cavity 101 is located is disposed in parallel with a second plane where a central line of the second fan installation cavity 201 is located, and a distance between the first plane and the second plane is H, wherein a value range of H is 630mm≥H≥570mm; wherein the central line of the first fan installation cavity 101 coincides with a rotation axis of an impeller part of the first fan 110, and the central line of the second fan installation cavity 201 coincides with a rotation axis of an impeller part of the second fan 210; wherein the first air duct portion 10 includes a first upper air duct section 11, a first transition section 12 and a first lower air duct section 13 which are sequentially connected, a bending angle between the first transition section 12 and the first upper air duct section 11 is α; or a bending angle between the first transition section 12 and the first lower air duct section 13 is α; or each of a bending angle between the first transition section 12 and the first upper air duct section 11 and a bending angle between the first transition section 12 and the first lower air duct section 13 is α; wherein a value range of α is 40degrees≥α≥25degrees.

The air duct structure in the present invention including a first air duct portion 10 and a second air duct portion 20, the first air duct portion 10 is provided with a first air duct 100, the first air duct 100 is provided with a first fan installation cavity 101 for installing a first fan 110, the second air duct portion 20 is provided with a second air duct 200, the second air duct 200 is provided with a second fan installation cavity 201 for installing a second fan 210, characterized in that: a first plane where a central line of the first fan installation cavity 101 is located is disposed in parallel with a second plane where a central line of the second fan installation cavity 201 is located, and a distance between the first plane and the second plane is H, wherein a value range of H is 630mm≥H≥570mm; wherein the central line of the first fan installation cavity 101 coincides with a rotation axis of an impeller part of the first fan 110, and the central line of the second fan installation cavity 201 coincides with a rotation axis of an impeller part of the second fan 210;

wherein the first air duct portion 10 includes a first upper air duct section 11, a first transition section 12 and a first lower air duct section 13 which are sequentially connected, a bending angle between the first transition section 12 and the first upper air duct section 11 is α; or a bending angle between the first transition section 12 and the first lower air duct section 13 is α; or each of a bending angle between the first transition section 12 and the first upper air duct section 11 and a bending angle between the first transition section 12 and the first lower air duct section 13 is α; wherein a value range of α is 40degrees≥α≥25degrees, and if an angle of the bending angle α is too large in an air conditioner, a structure of the first air duct portion 10 in a width direction of the first air duct portion 10 is not compact enough, a flow resistance is increased, and an air outflow volume is reduced; if the angle of the bending angle a is too small, a length of a direct current section of an air duct will be short in the case that a height of the main body of the air conditioner indoor unit is not changed, which is adverse to a circulation of air and a disposition of two parallel air ducts. Therefore, in the present invention, by designing the value range of the bending angle α and designing a value range of the distance H between two fan installation cavities, a layout of fan air duct is ensured to be compact, a flow resistance of the first air duct 100 is reduced, and the air outflow volume is improved.

In some embodiments, the second air duct portion 20 includes a second upper air duct section 21, a second transition section 22, and a second lower air duct section 23 which are sequentially connected, and a bending angle between the second transition section 22 and the second upper air duct section 21 is β;or a bending angle between the second transition section 22 and the second lower air duct section 23 is β, or each of a bending angle between the second transition section 22 and the second upper air duct section 21 and a bending angle between the second transition section 22 and the second lower air duct section 23 is β; wherein a value range of β is 16degrees≥β≥0degrees. In the air conditioner, if an angle of the bending angle β is too large, a structure of the second air duct portion 20 in a width direction of the second air duct portion 20 is not compact enough, and a flow resistance of the second air duct is increased, and the air outflow volume is reduced; if the angle of the bending angle β is too small, the length of the direct current section of the air duct will be short in the case that the height of the main body of the air conditioner indoor unit is not changed, which is adverse to the circulation of air and the disposition of the two parallel air ducts. Therefore, in the present invention, by designing a value range of the bending angle β and combining a value range of the distance H between two fan installation cavities designed above and the value range of the bending angle α, the layout of fan air duct is further ensured to be compact, the flow resistance of the first air duct 100 and a flow resistance of the second air duct 200 is reduced at the same time, and the air outflow volume is improved.

In the embodiments of the present invention, the air duct structure is applied to an air duct design of a distributed air supply cabinet type air conditioner having a double centrifugal fan.

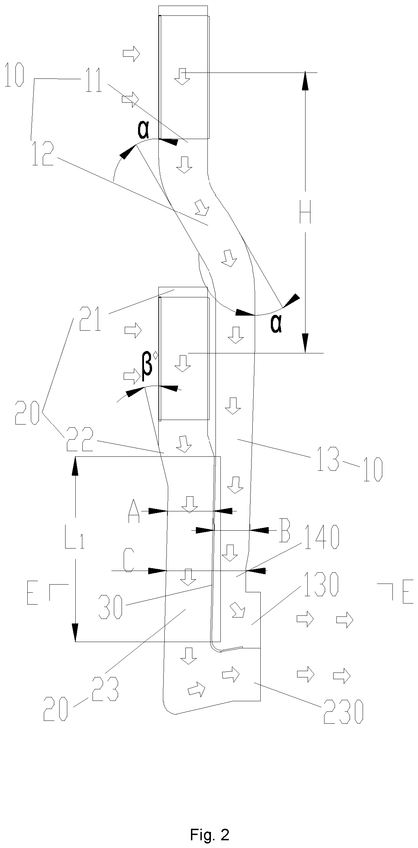

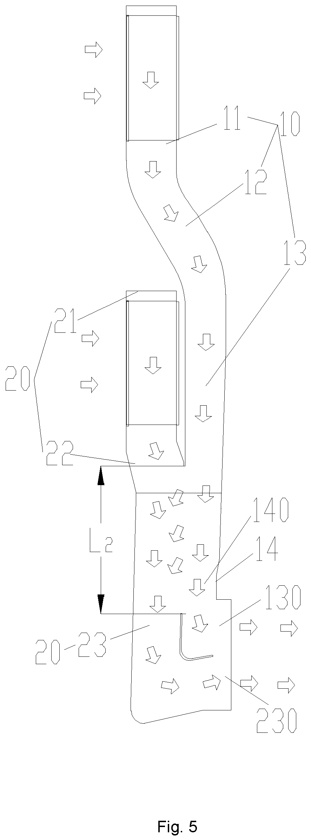

As shown in Figs. 2 and 5, the air duct structure has an air inlet 40, and at least a portion of the first upper air duct section 11 is located at one side of the first lower air duct section 13 along an air inlet direction of the air inlet 40.

Specifically, the air duct structure has an air inlet 40, and at least a portion of the second upper air duct section 21 is located at one side of the second lower air duct section 23 along an air inlet direction of an air inlet 40.

Specifically, the air duct structure has an air inlet 40, projections of at least a portion of the first air duct portion 10 in a predetermined vertical plane and projections of at least a portion of the second air duct portion 20 in the predetermined vertical plane are overlapped; and the predetermined vertical plane is perpendicular to an air inlet direction of the air inlet 40.

In the embodiments of the present invention, the air duct structure has an air inlet 40, the first air duct portion 10 has a tapered portion 14, and the tapered portion 14 is connected with an end of the first lower air duct section 13 away from the first transition section 12; the bottom of the second lower air duct section 23 and the tapered portion 14 are disposed in an air inlet direction of the air inlet 40 and spliced together to form a lower air outflow transition portion 140, and a width C of an air flow circulation section of the lower air outflow transition portion 140 in the air inlet direction of the air inlet 40 has a value range of $0.9*(A+B) \geq C \geq 0.8*(A+B)$.

In the embodiments of the present invention, a value range of a width A of an air flow circulation section of the second lower air duct section 23 in a predetermined direction is 80mm to 120mm; and/or a value range of the width B of an air flow circulation section of the first lower air duct section 13 in a predetermined direction is 60mm to 90mm; and/or in a same horizontal plane, a width A of an air flow circulation section of the second lower air duct section 23 in a predetermined direction is greater than a width B of an air flow circulation section of the first lower air duct section 13 in the predetermined direction; the air duct structure has an air inlet 40, and the predetermined direction is parallel to an air inlet direction of the air inlet 40.

Specifically, the second air duct portion 20 is provided with a second lower air duct section 23, and a part of an air duct section of the first lower air duct section 13 and a part of an air duct section of the second lower air duct section 23 are separated by a partition plate body portion 30 which is common by the first lower air duct section 13 and the second lower air duct section 23; a length of the partition plate body portion 30 in a vertical direction is $L_1$, wherein a value range of $L_1$ is $460mm \geq L_1 \geq 380mm$.

In the embodiment of the present invention, the partition plate body portion 30 is provided with a connected opening 300 for connecting the first air duct portion 10 with the second air duct portion 20.

Specifically, a length of the connected opening 300 in the vertical direction is $L_2$, and a value range of $L_2$ is $0.8*L_1 \geq L_2 \geq 0.5*L_1$.

In some embodiments, a stop plate 301 is disposed in the connected opening 300, and the stop plate 301 is spaced apart from a top end and a bottom end of the connected opening 300.

In the embodiment of the present invention, a length of the stop plate 301 in the vertical direction is p; wherein $120mm \geq p \geq 100mm$; and/or a vertical distance between a bottom end of the stop plate 301 and the bottom end of the connected opening 300 is q; wherein $80mm \geq q \geq 40mm$.

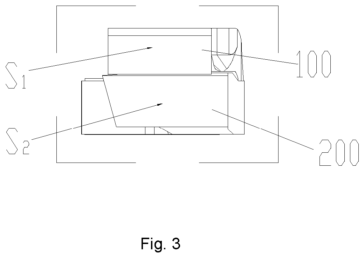

As shown in Fig. 3, an air flow circulation section of the first lower air duct section 13 located at the partition plate body portion 30 is $S_1$, an air flow circulation section of the second lower air duct section 23 located at the partition plate body portion 30 is $S_2$; where $S_1:S_2=3:4$.

Specifically, both the first fan installation cavity 101 and the second fan installation cavity 201 have air outlets, and a width of an air outlet of the first fan installation cavity 101 is equal to a width of an air outlet of the second fan installation cavity 201; wherein a width direction of the air outlet of the first fan installation cavity 101 and a width direction of the air outlet of the second fan installation cavity 201 are a distribution direction of the first air duct portion 10 and the second air duct portion 20.

In some embodiments, the width of the air outlet of the first fan installation cavity 101 is slightly different from the width of the air outlet of the second fan installation cavity 201.

Specifically, the air duct structure further includes a first outlet 130 and a second outlet 230, wherein the first outlet 130 is connected with the first air duct 100, the first outlet 130 is provided at the end of the first lower air duct section 13, the second outlet 230 is connected with the second air duct 200, and the second outlet 230 is provided at the end of the second lower air duct section 23; the width of the first outlet 130 is equal to that of the second outlet 230, the width direction of the first outlet 130 and the width direction of the second outlet 230 are both the extending direction of the air duct structure.

In a first embodiment of the present invention, a value of H is 600mm; and/or the first upper air duct section 11 and the first lower air duct section 13 are disposed along a horizontal direction; where $\alpha=30$degrees; and/or the second air duct portion 20 includes a second upper air duct section 21, a second transition section 22, and a second lower air duct section 23 which are sequentially connected, the second upper air duct section 21 and the second lower air duct section 23 are disposed along a horizontal direction, and a bending angle between the second transition section 22 and the second upper air duct section 21 is β;or a bending angle between the second transition section 22 and the second lower air duct section 23 is β, or each of a bending angle between the second transition section 22 and the second upper air duct section 21 and a bending angle between the second transition section 22 and the second lower air duct section 23 is β; wherein β=14degrees.

Specifically, at least a portion of the first air duct portion 10 and at least a portion of the second air duct portion 20 are overlapped with each other in a predetermined direction, and a width A of an air duct cavity of the second air duct portion 20 in the predetermined direction is 100mm; and/or a width B of an air duct cavity of the first air duct portion 10 in the predetermined direction is 74mm, and/or a width C of the overlapped portion of the first air duct portion 10 and the second air duct portion 20 is 175mm.

Specifically, a partition plate body portion 30 is disposed at an overlapping portion of the first air duct portion 10 and the second air duct portion 20, the partition plate body portion 30 is common by the first air duct portion 10 and the second air duct portion 20, wherein, a length of the partition plate body portion 30 in a vertical direction is $L_1$, wherein $L_1$ is 440mm; and/or a connected opening 300 for connecting the first air duct portion 10 with the second air duct portion 20 is disposed on the partition plate body portion 30, and a length of the connected opening 300 in a vertical direction is L2, wherein L2 is =330 mm.

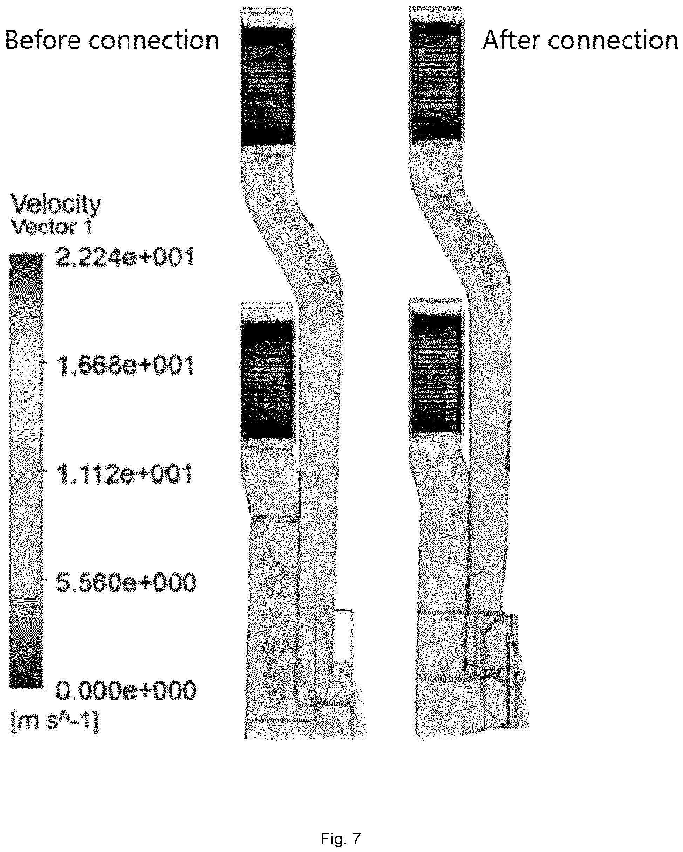

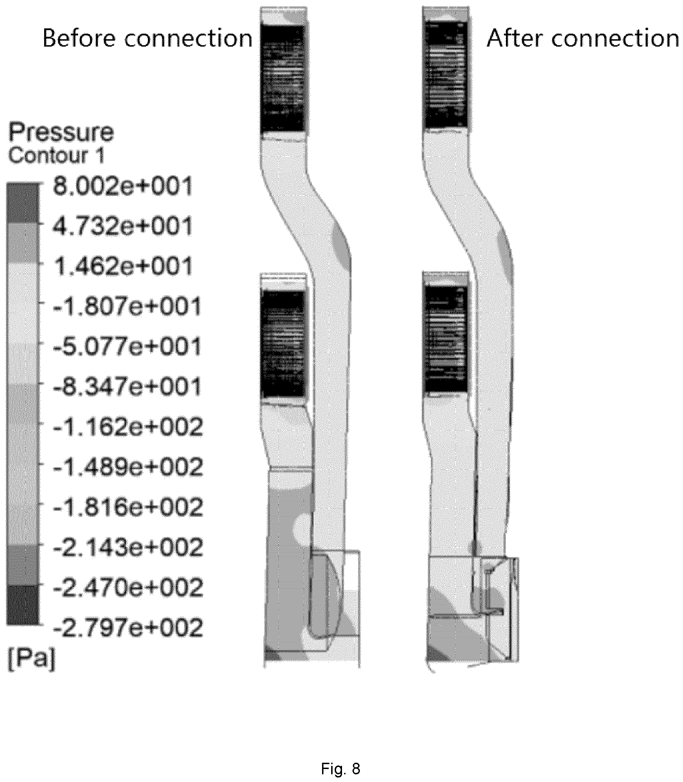

In a specific implementation process of the first embodiment of the present invention, as shown in Figs. 5, 7 and 8, when designed using this design parameter, the layout of fan air duct is ensured to be compact, a volume of an air duct occupies a whole machine space in an optimal state, the flow resistance is reduced, and a self-balanced of a pressures among different air ducts is good. Because the first air duct 100 where the first fan 110 is located is relatively long and an area ratio of the cross sections of the first air duct 100 to the second air duct 200 at an airflow convergence is $S_1:S_2=3:4$, and the first transition section 12 of the first air duct 100 is bent, the flow resistance of the first air duct 100 is relatively large, an air outflow dynamic pressure of the first fan 110 is mostly converted into static pressure, which causes a relatively large air speed loss, resulting in a relatively high static pressure and a relatively small dynamic pressure. The second fan 210 has no large resistance to air outflow, so that an air speed is high, the air flow dynamic pressure is large, the air flow static pressure is small. The first air duct 100 is connected with the second air duct 200.

Although the air flow in the first air duct 100 and the second air duct 200 are parallel before being collected, the side with a high static pressure pushes the air to the side with a low static pressure, and the flow direction of the air flow changes, so as to balance the pressures on the two sides, reduce the vortex flow, reduce the flow resistance, increase an air volume, and also make the air outflow volumes of the first outlet 130 and the second outlet 230 approximately consistent. Meanwhile, both the dynamic pressure and the static pressure in the first air duct 100 and the second air duct 200 become stable, so that the overall aerodynamic noise is significantly improved.

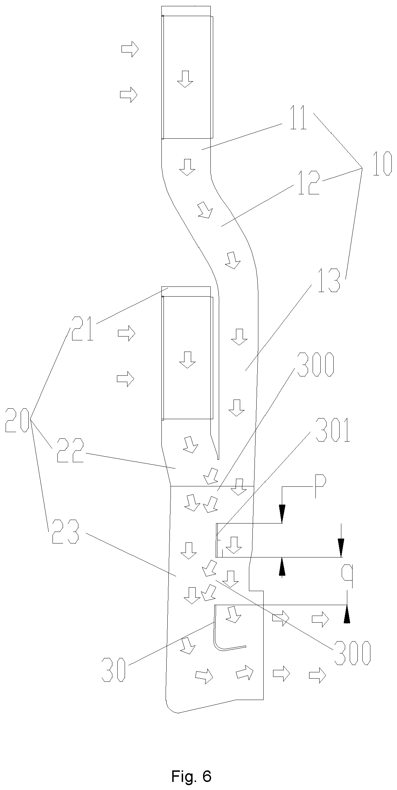

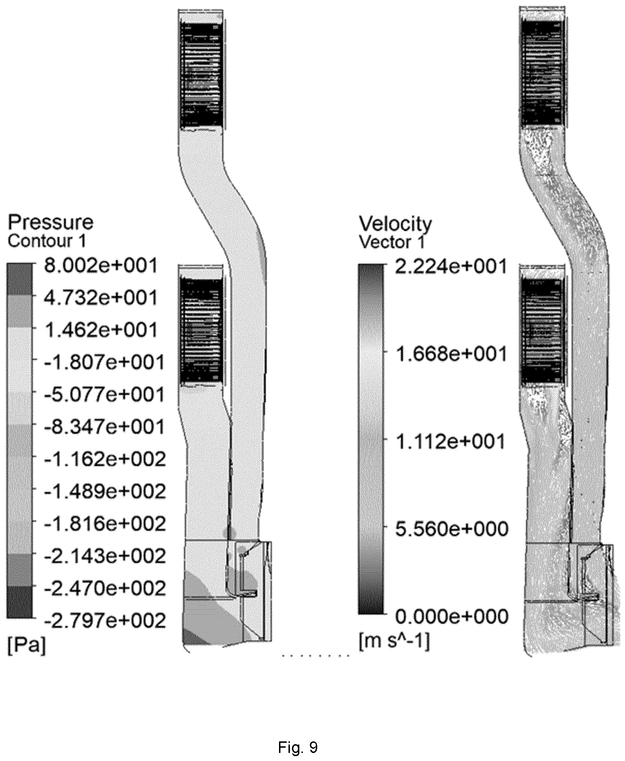

In a second embodiment of the present invention, as shown in Figs. 6 and 9, the distance H between the first fan 110 and the second fan 210 is 600 mm, the area ratio of the cross sections of the first air duct 100 to the second air duct 200 is $S_1:S_2=3:4$, the bending angle α of the first transition section 12 is 30degrees, the bending angle β of the second transition section 22 is 14degrees, a width A of the second air duct 100 is 100mm, and a width B of the first air duct 100 is 74mm; a width C of the air outlet duct is 175mm, a length $L_1$ of a shared wall of the first duct and the second duct is equal to 440mm, and a length $L_2$ of a duct connected opening is equal to 330mm, and a $L_2$ section can also be divided into two sections of connected sections, in which a height from the bottom partition position is q, 80mm≥q≥40mm, providing a partition plate with a length of p at the bottom partition position, and 120mm≥p≥100mm, so that pressures at two sides are balanced, a vortex flow is reduced, the flow resistance is reduced, the air volume is increased, and the pressure in the air duct is self-balanced, thereby reducing the aerodynamic noise.

The present invention further provides an air conditioner, including a housing and an air duct structure disposed in the housing, wherein, the air duct structure is the air duct structure described above.

In conclusion, in the parameter design of the air duct structure of the present invention, when a plurality of fans of an air conditioner are disposed at different horizontal heights, When air is discharged in parallel from respective air ducts, the design method can not only reduce the flow resistance, but also increase the volume of air discharged, The pressure in the air outflow channels can also be self-balanced, so that the air flow pressure and static pressure transition between different channels is smoother, thus, an effect of an balancing air pressure difference of each flow channel is achieved, the aerodynamic noise is smaller, and sound quality is better.

From the above description, it can be seen that the above embodiments of the present invention achieve the following technical effects:

The air duct structure in the present invention including a first air duct portion 10 and a second air duct portion 20, the first air duct portion 10 is provided with a first air duct 100, the first air duct 100 is provided with a first fan installation cavity 101 for installing a first fan 110, the second air duct portion 20 is provided with a second air duct 200, the second air duct 200 is provided with a second fan installation cavity 201 for installing a second fan 210, characterized in that: a first plane where a central line of the first fan installation cavity 101 is located is disposed in parallel with a second plane where a central line of the second fan installation cavity 201 is located, and a distance between the first plane and the second plane is H, wherein a value range of H is 630mm≥H≥570mm; wherein the central line of the first fan installation cavity 101 coincides with a rotation axis of an impeller part of the first fan 110, and the central line of the second fan installation cavity 201 coincides with a rotation axis of an impeller part of the second fan 210; wherein the first air duct portion 10 includes a first upper air duct section 11, a first transition section 12 and a first lower air duct section 13 which are sequentially connected, a bending angle between the first transition section 12 and the first upper air duct section 11 is α; or a bending angle between the first transition section 12 and the first lower air duct section 13 is α; or each of a bending angle between the first transition section 12 and the first upper air duct section 11 and a bending angle between the first transition section 12 and the first lower air duct section 13 is α; wherein a value range of α is 40degrees≥α≥25degrees, and if an angle of the bending angle α is too large in an air conditioner, a structure of the first air duct portion 10 in a width direction of the first air duct portion 10 is not compact enough, a flow resistance is increased, and an air outflow volume is reduced; if the angle of the bending angle a is too small, a length of a direct current section of an air duct will be short in the case that a height of the main body of the air conditioner indoor unit is not changed, which is adverse to a circulation of air and a disposition of two parallel air ducts. Therefore, in the present invention, by designing the value range of the bending angle α and designing a value range of the distance H between two fan installation cavities, a layout of fan air duct is ensured to be compact, a flow resistance of the first air duct 100 is reduced, and the air outflow volume is improved.

In some embodiments, the second air duct portion 20 includes a second upper air duct section 21, a second transition section 22, and a second lower air duct section 23 which are sequentially connected, and the bending angle between the second transition section 22 and the second upper air duct section 21 is β;or the bending angle between the second transition section 22 and the second lower air duct section 23 is β, or both the bending angle between the second transition section 22 and the second upper air duct section 21 and the bending angle between the second transition section 22 and the second lower air duct section 23 are β;wherein the value range of β is 16degrees≥β≥0degrees. In the air conditioner, if an angle of the bending angle β is too large, a structure of the second air duct portion 20 in a width direction of the second air duct portion 20 is not compact enough, and a flow resistance of the second air duct is increased, and the air outflow volume is reduced; if the angle of the bending angle β is too small, the length of the direct current section of the air duct will be short in the case that the height of the main body of the air conditioner indoor unit is not changed, which is adverse to the circulation of air and the disposition of the two parallel air ducts. Therefore, in the present invention, by designing a value range of the bending angle β and combining a value range of the distance H between two fan installation cavities designed above and the value range of the bending angle α, the layout of fan air duct is further ensured to be compact, the flow resistance of the first air duct 100 and a flow resistance of the second air duct 200 is reduced at the same time, and the air outflow volume is improved.

The foregoing descriptions are merely exemplary embodiments of the present invention, but are not intended to limit the present invention. For those skilled in the art, the present invention has various modifications and variations. Any modifications, equivalent replacements, improvements and the like made within the spirit and principle of the present invention shall belong to the scope of protection of the present invention.

**Claims**

**1.** An air duct structure, comprising a first air duct portion (10) and a second air duct portion (20), the first air duct portion (10) is provided with a first air duct (100), the first air duct (100) is provided with a first fan installation cavity (101) for installing a first fan (110), the second air duct portion (20) is provided with a second air duct (200), the second air duct (200) is provided with a second fan installation cavity (201) for installing a second fan (210), **characterized in that**:

a first plane where a central line of the first fan installation cavity (101) is located is disposed in parallel with a second plane where a central line of the second fan installation cavity (201) is located, and a distance between the first plane and the second plane is H, wherein a value range of H is 630mm≥H≥570mm; wherein the central line of the first fan installation cavity (101) coincides with a rotation axis of an impeller part of the first fan (110), and the central line of the second fan installation cavity (201) coincides with a rotation axis of an impeller part of the second fan (210);
wherein the first air duct portion (10) comprises a first upper air duct section (11), a first transition section (12) and a first lower air duct section (13) which are sequentially connected, a bending angle between the first transition section (12) and the first upper air duct section (11) is α; or a bending angle between the first transition section (12) and the first lower air duct section (13) is α; or each of a bending angle between the first transition section (12) and the first upper air duct section (11) and a bending angle between the first transition section (12) and the first lower air duct section (13) is α; wherein a value range of α is 40degrees≥α≥25degrees.

**2.** The air duct structure according to claim 1, wherein, the second air duct portion (20) comprises a second upper air duct section (21), a second transition section (22), and a second lower air duct section (23) which are sequentially connected, and a bending angle between the second transition section (22) and the second upper air duct section (21) is β;or a bending angle between the second transition section (22) and the second lower air duct section (23) is β, or each of a bending angle between the second transition section (22) and the second upper air duct section (21) and a bending angle between the second transition section (22) and the second lower air duct section (23) is β; wherein a value range of β is 16degrees≥β≥0degrees.

**3.** The air duct structure according to claim 1, wherein,the air duct structure has an air inlet (40), and at least a portion of the first upper air duct section (11) is located at one side of the first lower air duct section (13) along an air inlet direction of the air inlet (40).

**4.** The air duct structure according to claim 2, wherein, the air duct structure has an air inlet (40), and at least a portion of the second upper air duct section (21) is located at one side of the second lower air duct section (23) along an air inlet direction of the air inlet (40).

**5.** The air duct structure according to claim 1, wherein, the air duct structure has an air inlet (40), projections of at least a portion of the first air duct portion (10) in a predetermined vertical plane and projections of at least a portion of the second air duct portion (20) in the predetermined vertical plane are overlapped; and the predetermined vertical plane is perpendicular to an air inlet direction of the air inlet (40).

**6.** The air duct structure according to claim 2, wherein,
the air duct structure has an air inlet (40), the first air duct portion (10) has a tapered portion (14), and the tapered portion (14) is connected with an end of the first lower air duct section (13) away from the first transition section (12); the bottom of the second lower air duct section (23) and the tapered portion (14) are disposed in an air inlet direction of the air inlet (40) and spliced together to form a lower air outflow transition portion (140), and a width C of an air flow circulation section of the lower air outflow transition portion (140) in the air inlet direction of the air inlet (40) has a value range of $0.9*(A+B)≥C≥0.8*(A+B)$.

**7.** The air duct structure according to claim 2, wherein, a value range of a width A of an air flow circulation section of the second lower air duct section (23) in a predetermined direction is 80mm to 120mm.

**8.** The air duct structure according to claim 1, wherein, a value range of the width B of an air flow circulation section of the first lower air duct section (13) in a predetermined direction is 60mm to 90mm.

**9.** The air duct structure according to claim 2, wherein, in a same horizontal plane, a width A of an air flow circulation section of the second lower air duct section (23) in a predetermined direction is greater than a width B of an air flow circulation section of the first lower air duct section (13) in the predetermined direction; the air duct structure has an air inlet (40), and the predetermined direction is parallel to an air inlet direction of the air inlet (40).

**10.** The air duct structure according to claim 1, wherein, the second air duct portion (20) is provided with a second lower air duct section (23), and a part of an air duct section of the first lower air duct section (13) and a part of an air duct section of the second lower air duct section (23) are separated by a partition plate body portion (30) which is common by the first lower air duct section (13) and the second lower air duct section (23); a length of the partition plate body portion (30) in a vertical direction is $L_1$, wherein a value range of $L_1$ is $460mm≥L_1≥380mm$.

**11.** The air duct structure according to claim 10, wherein, the partition plate body portion (30) is provided with a connected opening (300) for connecting the first air duct portion (10) with the second air duct portion (20).

**12.** The air duct structure according to claim 11, wherein, a length of the connected opening (300) in the vertical direction is $L_2$, and a value range of $L_2$ is $0.8*L_1≥L_2≥0.5*L_1$.

**13.** The air duct structure according to claim 11, wherein, a stop plate (301) is disposed in the connected opening (300), and the stop plate (301) is spaced apart from a top end and a bottom end of the connected opening (300).

**14.** The air duct structure according to claim 13, wherein, a length of the stop plate (301) in the vertical direction is p; wherein 120mm≥p≥100mm.

**15.** The air duct structure according to claim 13, wherein, a vertical distance between a bottom end of the stop plate (301) and the bottom end of the connected opening (300) is q; wherein 80mm≥q≥40mm.

**16.** The air duct structure according to claim 10, wherein, an air flow circulation section of the first lower air duct section (13) located at the partition plate body portion (30) is $S_1$, and an air flow circulation section of the second lower air duct section (23) located at the partition plate body portion (30) is $S_2$; where $S_1:S_2=3:4$.

17. The air duct structure according to any one of claims 1 to 16, wherein, both the first fan installation cavity (101) and the second fan installation cavity (201) have air outlets, and a width of an air outlet of the first fan installation cavity (101) is equal to a width of an air outlet of the second fan installation cavity (201); wherein a width direction of the air outlet of the first fan installation cavity (101) and a width direction of the air outlet of the second fan installation cavity (201) are a distribution direction of the first air duct portion (10) and the second air duct portion (20).

18. The air duct structure according to any one of claims 1 to 16, wherein, a value of H is 600mm.

19. The air duct structure according to any one of claims 1 to 16, wherein, the first upper air duct section (11) and the first lower air duct section (13) are disposed along a horizontal direction; where $\alpha$=30degrees.

20. The air duct structure according to any one of claims 1 to 16, wherein,the second air duct portion (20) comprises a second upper air duct section (21), a second transition section (22), and a second lower air duct section (23) which are sequentially connected, the second upper air duct section (21) and the second lower air duct section (23) are disposed along a horizontal direction, and a bending angle between the second transition section (22) and the second upper air duct section (21) is $\beta$;or a bending angle between the second transition section (22) and the second lower air duct section (23) is $\beta$, or each of a bending angle between the second transition section (22) and the second upper air duct section (21) and a bending angle between the second transition section (22) and the second lower air duct section (23) is $\beta$; wherein $\beta$=14degrees.

21. The air duct structure according to any one of claims 1 to 16, wherein, at least a portion of the first air duct portion (10) and at least a portion of the second air duct portion (20) are overlapped with each other in a predetermined direction, and a width A of an air duct cavity of the second air duct portion (20) in the predetermined direction is 100mm.

22. The air duct structure according to any one of claims 1 to 16, wherein, at least a portion of the first air duct portion (10) and at least a portion of the second air duct portion (20) are overlapped with each other in a predetermined direction, and a width B of an air duct cavity of the first air duct portion (10) in the predetermined direction is 74mm.

23. The air duct structure according to any one of claims 1 to 16, wherein, at least a portion of the first air duct portion (10) and at least a portion of the second air duct portion (20) are overlapped with each other in a predetermined direction, and a width C of the overlapped portion of the first air duct portion (10) and the second air duct portion (20) is 175mm.erein at I24. The air duct structure according to claim 21, wherein,a partition plate body portion (30) is disposed at an overlapping portion of the first air duct portion (10) and the second air duct portion (20), the partition plate body portion (30) is common by the first air duct portion (10) and the second air duct portion (20), wherein,a length of the partition plate body portion (30) in a vertical direction is $L_1$, wherein $L_1$ is 440mm.

25. The air duct structure according to claim 21, wherein, a connected opening (300) for connecting the first air duct portion (10) with the second air duct portion (20) is disposed on the partition plate body portion (30), and a length of the connected opening (300) in a vertical direction is $L_2$, wherein $L_2$ is =330 mm.

26. An air conditioner, comprising a housing and an air duct structure disposed in the housing, wherein, the air duct structure is the air duct structure as claimed in any one of claims 1 to 25.

Fig. 1

Fig. 2

Fig. 3

Fig. 4

Fig. 5

Fig. 6

Before connection

After connection

Velocity
Vector 1

2.224e+001

1.668e+001

1.112e+001

5.560e+000

0.000e+000
[m s^-1]

Fig. 7

Before connection

After connection

Pressure
Contour 1

8.002e+001

4.732e+001

1.462e+001

-1.807e+001

-5.077e+001

-8.347e+001

-1.162e+002

-1.489e+002

-1.816e+002

-2.143e+002

-2.470e+002

-2.797e+002

[Pa]

Fig. 8

Fig. 9

## INTERNATIONAL SEARCH REPORT

| | |
|---|---|
| International application No. | |
| | **PCT/CN2022/124705** |

**A. CLASSIFICATION OF SUBJECT MATTER**

F24F 1/0033(2019.01)i; F24F 1/0022(2019.01)i; F24F 13/24(2006.01)i

According to International Patent Classification (IPC) or to both national classification and IPC

**B. FIELDS SEARCHED**

Minimum documentation searched (classification system followed by classification symbols)

F24F;F04D

Documentation searched other than minimum documentation to the extent that such documents are included in the fields searched

Electronic data base consulted during the international search (name of data base and, where practicable, search terms used)

EPODOC, WPI, CNPAT, CNKI: 空调, 二, 两, 双, 多个, 风道, 风管, 弯折, 弯曲, 折弯, 倾角, 角, 间距, 距离, 风扇, 风机, 减小, 减弱, 降低, 阻力; air w conditioner, two, double, second, air w duct, bend+, angle, fan, decrease, resistance

**C. DOCUMENTS CONSIDERED TO BE RELEVANT**

| Category* | Citation of document, with indication, where appropriate, of the relevant passages | Relevant to claim No. |
|---|---|---|
| PX | CN 114992715 A (ZHUHAI GREE ELECTRIC APPLIANCES INC.) 02 September 2022 (2022-09-02) description, paragraphs 34-63, and figures 1-8 | 1-26 |
| A | CN 110160152 A (NINGBO AUX ELECTRIC CO., LTD. et al.) 23 August 2019 (2019-08-23) description, paragraphs 39-81, and figures 1-6 | 1-26 |
| A | CN 209541019 U (ZHUHAI GREE ELECTRIC APPLIANCES INC.) 25 October 2019 (2019-10-25) entire document | 1-26 |
| A | CN 103807916 A (ZHUHAI GREE ELECTRIC APPLIANCES INC.) 21 May 2014 (2014-05-21) entire document | 1-26 |
| A | CN 111197584 A (ZHUHAI GREE ELECTRIC APPLIANCES INC.) 26 May 2020 (2020-05-26) entire document | 1-26 |

☑ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 December 2022** | **16 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

EP 4 495 490 A1

**INTERNATIONAL SEARCH REPORT**

International application No.

**PCT/CN2022/124705**

**C.    DOCUMENTS CONSIDERED TO BE RELEVANT**

| Category* | Citation of document, with indication, where appropriate, of the relevant passages | Relevant to claim No. |
|---|---|---|
| A | WO 2018072523 A1 (ZHUHAI GREE ELECTRIC APPLIANCES INC.) 26 April 2018 (2018-04-26) <br> entire document | 1-26 |
| A | CN 110160147 A (NINGBO AUX ELECTRIC CO., LTD. et al.) 23 August 2019 (2019-08-23) <br> entire document | 1-26 |

Form PCT/ISA/210 (second sheet) (January 2015)

International application No.

**PCT/CN2022/124705**

| Patent document cited in search report | | | Publication date (day/month/year) | Patent family member(s) | | | Publication date (day/month/year) |
|---|---|---|---|---|---|---|---|
| CN | 114992715 | A | 02 September 2022 | None | | | |
| CN | 110160152 | A | 23 August 2019 | None | | | |
| CN | 209541019 | U | 25 October 2019 | None | | | |
| CN | 103807916 | A | 21 May 2014 | None | | | |
| CN | 111197584 | A | 26 May 2020 | EP | 3855023 | A1 | 28 July 2021 |
| | | | | WO | 2020103602 | A1 | 28 May 2020 |
| WO | 2018072523 | A1 | 26 April 2018 | CN | 106352412 | A | 25 January 2017 |
| CN | 110160147 | A | 23 August 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210263892